# EUROPEAN PATENT SPECIFICATION

(11) **EP 1 531 109 B1**
(45) Date of publication and mention of the grant of the patent: **07.03.2007**
(21) Application number: 04023488.2
(22) Date of filing: 01.10.2004
(51) Int. Cl.: B60T 13/66

(54) **Electronic braking control for a locomotive**
Elektronische Regeleinheit für eine Lokomotive
Unité de réglage pour une locomotive

(30) Priority: 12.11.2003 US 519391 P; 05.03.2004 US 708465
(43) Date of publication of application: 18.05.2005
(73) Proprietor: Wabtec Holding Corporation, Wilmerding, PA 15148 (US)
(72) Inventor: Hollandsworth, Paul, Gaithersburgh Maryland 20882 (US); Singleton, Steve, Myersville Maryland 21773 (US); Tubergen, Gary, Frederick Maryland 21703 (US)
(74) Representative: Heim, Hans-Karl

(56) References cited:
- EP-A- 0 829 402
- US-A- 5 025 734
- US-A- 5 681 015
- US-A1- 2002 049 520
- US-B1- 6 401 015
- US-B1- 6 422 531

## Description

### Field of The Invention

This invention is related to the railway industry, and in particular, the control of pneumatic brakes for railway vehicles.

### Background of the Invention

The basic railway triple valve pneumatic airbrake was invented by George Westinghouse over one hundred years ago and the functions of that brake are still in operation today on many railway freight vehicles.

The basic idea of the triple valve airbrake is to use a pressurized pneumatic line to propagate braking control signals from the train locomotive to all other vehicles in the train. The pneumatic line, known as the brake pipe (BP), runs the length of the train and is coupled to air reservoirs on each car. The system is charged to an operating state by pressurizing the BP, thus filling the reservoirs on each car with pressurized air. When the air pressure in the BP is allowed to drop, a control valve on each car allows pressurized air to flow from the reservoir into the brake cylinder, thereby providing a mechanical force which applies a brake shoe to the wheel of the railway vehicle. The brake force can be increased until the pressure in the BP and the reservoir are equalized. To release the brakes, pressure in the BP is raised. When the control valve senses the increase, the air is exhausted from the brake cylinders by the valve, and the reservoir is charged until the pressure in the BP and the pressure in the reservoir are equalized.

The brakes are controlled in the locomotive with two handles, the "independent handle" and the "automatic handle." The independent handle controls the braking of the locomotive, while the automatic handle controls the braking of the entire train, including the locomotive.

The lead locomotive, as well as all other locomotives in the consist, have an independent braking system controlled by the independent handle in the lead locomotive. The independent application and release (IAR) pipe, also known in the railway industry as the "20 pipe," controls the independent brakes in the consist. Therefore, the vehicles in the consist have brake cylinders which can be pressurized by a drop in pressure from the BP or a rise in pressure in the IAR pipe.

Several improvements to the basic airbrake control have been made since the original design, including the sensing and control of BP and other pipe pressures electronically. One example of such an electronic control for pneumatic airbrakes is the EPIC^{®} Electronic Air Brake (EAB) manufactured by Wabtec, Inc. of Wilmerding, Pa. This brake utilizes transducers to sense pressures in the brake pipe (BP), the main reservoir equalizing pipe, the independent application and release (IAR) pipe and the actuating (ACT) pipe, also known in the railway industry as the "13 pipe," which are standard pipes on most locomotive airbrakes, such as the 24RL and the 26L, which operate under the standards of the American Association of Railroads. Additionally, solenoids are used to open and close valves to control the pressures in these pipes. The system is controlled by an on-board computer, which can make decisions regarding various pipe pressures based on the input of the transducers, the position of the handles in the locomotive and other inputs from other on-board computer systems in the locomotive.

There have also been attempts to modularize locomotive air brakes. U.S. Patent 5,025,734 (issued 1/25/1991 to Romansky, et al.), entitled "Locomotive Equipment Cage" discloses a system whereby unitized valve assemblies are stacked in a vertical, side-by-side relationship, and are connected to a mating header at one end of the cage.

US 6,401,015 B 1 discloses a train control system having a plurality of control subsystems. Each control subsystem preferably comprises a radio transceiver, a first processor connected to the radio transceiver for communicating with at least one other control subsystem, an electronic brake valve connected to the first processor and an electropneumatic controller connected to the first processor and the electronic brake valve, for interfacing to the air brake system of the train.

Prior art electronic air brake controls are known to have various deficiencies. First, some units in the field are difficult to maintain because of the complexity of the units and the difficulty of replacing parts on the units due to the many electronic and pneumatic connections which must be made. Second, the harsh operating environment of the typical locomotive may include extremes of temperature, vibration and dirt, which can, under some circumstances, be extremely hard on the sensitive computer electronics which control the devices.

It would be desirable to provide an electronic air brake control unit which has improved reliability and redundant computer components and which in particular has a modular design and field replaceable units which can be quickly and easily swapped in and out in the field.

### Summary of the Invention

This object is solved by an electronic air brake control unit having the features of claim 1. Preferred embodiments are given in the dependent claims.

The air brake of the present invention can have an improved physical configuration that allows failed components to be more easily replaced. Components can be grouped together into field replaceable units by function. This allows for easy diagnosis of problems and isolation of failed components. The field replaceable units, or "portions," have been designed to allow replacement with a minimum disturbance to the wiring or pneumatic piping of the locomotive into which the brake has been installed.

All portions of the air brake can be connected to a manifold which isolates all pneumatic connections to the locomotive on one side thereof and all replaceable portions on the other side thereof. Channels can be defined in the manifold to provide pneumatic air passageways between the locomotive piping and the air handling devices in the portions. As such, replaceable portions can be unbolted from the manifold and replaced very easily, with all pneumatic connections being automatically made when the portion is mechanically attached to the manifold. Additionally, this system allows for customized configurations of the air brake for individual customers.

To improve the reliability of the computer components of the airbrake, several improvements have been made over prior art air brake control units. The airbrake now utilizes a distributed and redundant computing topography to ensure reliable operation.

Each portion of the brake contains a physically identical computing module which has been loaded with software specific to the portion into which it is installed. The software contains instructions for the reading of all transducers within the portion and the control of all solenoids associated with the portion, according to the logic of the software with which it is programmed. Additionally, each computing module contains dual processing units, both of which are independently running the same software and monitoring all transducer outputs. However, only one of the processors is allowed to actuate the solenoids which control the pipe pressures for that portion. The computing modules also contain an independent programmed logic unit which runs an arbitration program to determine which of the processors will be allowed to control the solenoids of that portion.

The individual computing modules in each portion communicate with each other and the outside world via parallel, redundant busses. Some outside inputs are generated by the handles, which are controlled by the engineer, and from the data bus on the locomotive. A gateway is provided between the air brake parallel redundant busses and the locomotive bus to allow the exchange of data therebetween.

### Description of the Drawings

Figure 1a shows the front side of the pneumatic operating unit wherein the field replaceable units are located.
Figure 1b shows the reverse side of the pneumatic operating unit where the air handling units are located.

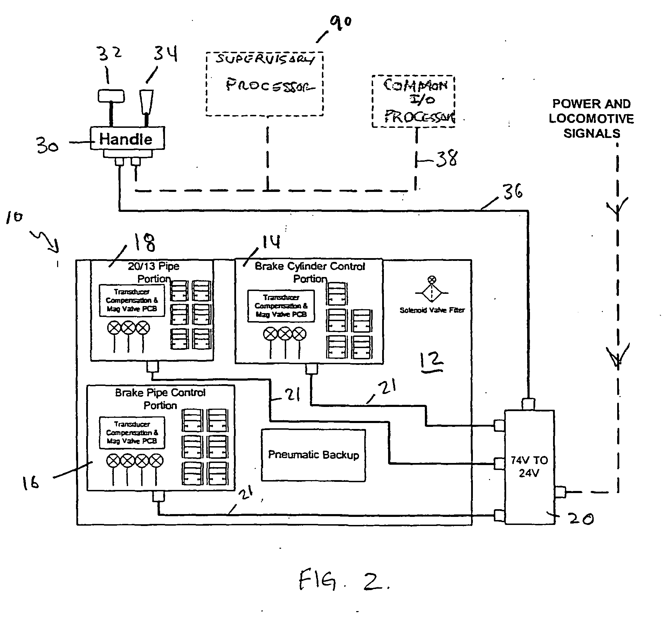

Figure 2 shows a schematic diagram of the overall braking system.
Figure 3a shows a perspective view of the brake handle unit showing the independent and automatic brake handles.
Figure 3b shows the top view of the brake handle unit of Figure 3a.
Figure 4 shows a block diagram of the portion controller module.
Figure 5 shows a state diagram for the redundancy control circuitry of the portion controller module.

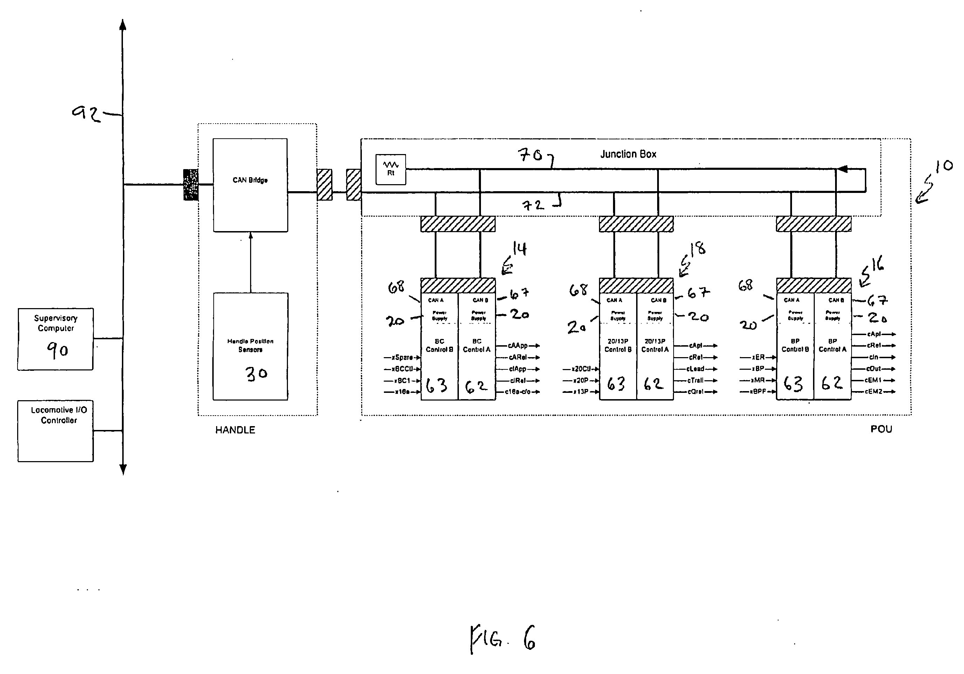

Figure 6 shows the topology of the distributed control network of the present invention

### Detailed Description of the Invention

The air brake control described herein is made up of two major components, handle unit 30 and pneumatic operating unit 10. Handle unit 30 is typically located in the cab of a locomotive and is accessible by the engineer during normal operations. Pneumatic operating unit 10 is typically located in the air brake equipment locker under the cab of the locomotive.

Handle unit 30 has controls consisting of automatic brake handle 32 and independent brake handle 34. Automatic brake handle 32 controls pressure in the BP, which, in turn, controls the braking of all cars in the train, including locomotives in the train consist. Independent handle 34 controls the pressure in the IAR and ACT pipes, which in turn, controls the braking of the lead locomotive and additional locomotives in the train consist independently from automatic brake handle 32 and the rest of the train.

The air brake control in a locomotive in a typical train is set up in one of several modes, depending on the configuration of the train. The mode determines which brakes and pipe pressures each locomotive controls and responds to.

In a locomotive in LEAD/CUT-IN mode (typically, the first locomotive in the consist) both the automatic handle 32 and the independent handle 34 are active. The air brake accepts input commands from the BP, the IAR pipe, the ACT pipe and various penalty and emergency brake commands originating from both internally (within the air brake control) and externally (i.e., from the locomotive control system). It provides output signals to the air handling devices on the pneumatic manifold to control brake system pressures and accepts feedback from the transducers to provide closed loop control. A locomotive in LEAD/CUT-OUT mode (or HELPER mode) has an active independent handle 34, but an inactive automatic handle 32, while a locomotive in TRAIL mode has both independent handle 34 and automatic handle 32 inactive. If configured as LEAD/CUT OUT or TRAIL, the air brake responds to changes in BP pressure commanded by the controlling locomotive.

Automatic Brake handle 32 normally is designed with at least six positions: RELEASE, MINIMUM SERVICE, FULL SERVICE, SUPPRESSION, CONTINUOUS SERVICE (HANDLE OFF), and EMERGENCY, and is used to control the application and release of the automatic brake. Each of these positions corresponds to a specific amount of equalizing reservoir pressure reduction. Various degrees of braking are available between minimum service and full service applications.

The independent brake handle 34 normally has two positions, RELEASE and FULL APPLICATION, with a varying APPLY ZONE therebetween. Each location in the independent brake handle APPLY ZONE corresponds to a specific IAR pipe pressure, and is used to control the application and release of the independent brake.

The second major component of the air brake system is pneumatic operating unit 10, which consists of pneumatic manifold 12 and the operating portions and various air handling devices.

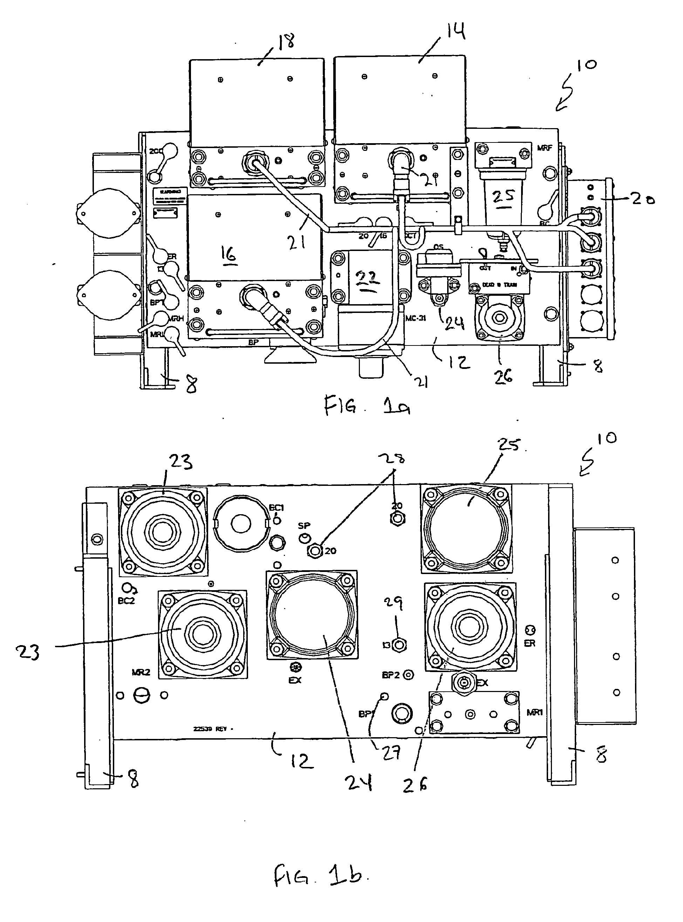

Pneumatic manifold 12, shown in Figures 1a and 1b, provides a central unit for the connection and disconnection of the air piping and electrical wiring. This arrangement also provides for easy removal and replacement of air handling devices without having to disturb the locomotive's wiring or piping, thereby making it possible to arrange the portions of the unit in easily field-replaceable units. The use of pneumatic manifold 12 allows the elimination of much of the external piping associated with the pneumatic brake equipment, a deficiency in many prior art designs. This minimizes the number of locations for leaks to develop and reduces the time for the troubleshooting of any leaks that may develop during the service life of the locomotive.

One side of pneumatic manifold, shown in Figure 1 a contains the connections for the various control portions, namely brake cylinder control portion 14, brake pipe control portion 16 and IAR/ACT pipe control portion 18. The opposite side, shown in Figure 1b, contains connection points for air volumes 23, 24, 25 and 26, which are used to provide stability and appropriate timing response during various operations. Also located on the side of pneumatic manifold shown in Figure 1b are connections to the pneumatic system of the locomotive, including, among others, BP connection 27, IAR pipe connection 28 and ACT pipe connection 29.

Preferably, manifold 12 is either a laminated assembly or a solid block which has been deep drilled from two or more edges to form the pneumatic air channels within. The preferred metal for manifold 12 is aluminum or an aluminum alloy, but any suitable metal may be used.

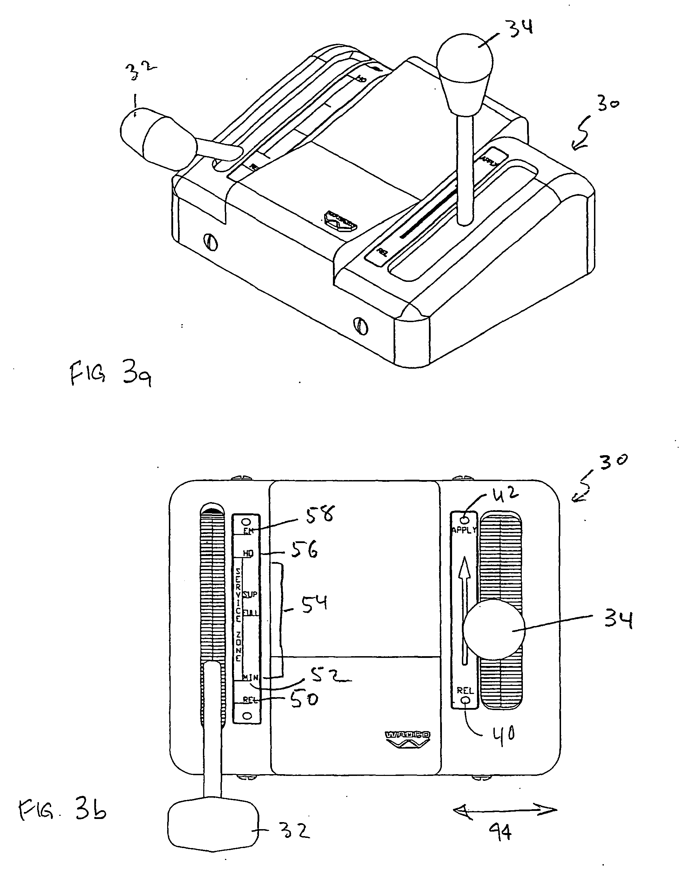

IAR/ACT pipe control portion 18 is connected to manifold 12 as shown in Figure 1a, and is primarily responsible for controlling pressures in the IAR pipe and the ACT pipe, primarily in response to movement of independent handle 34. When independent handle 34 is active, a movement of the independent handle 34 toward the FULL APPLICATION position 42, as shown in Figure 3b, will cause a rise in pressure in the IAR pipe. Brake cylinder pressure in the locomotives in the consist will increase proportionally to increases in pressure in the IAR pipe. A movement of independent handle 34 to the RELEASE position 40 will cause a venting of the IAR pipe and a release of the pressure in the locomotive brake cylinders due to the pressure in the IAR pipe. However, locomotive brake cylinder pressure due to decreases in pressure of the BP are not released from the locomotive brake cylinder. Pressure in the locomotive brake cylinder due to decreased pressure in the BP is released either by restoring pressure in the BO or by pressurizing the ACT pipe. This is accomplished by moving independent handle 34 to the BAIL-OFF position, shown as arrow 44 in Figure 3b.

Brake cylinder control portion 14 provides the means to control the supply of main reservoir pressure to the brake cylinders and the exhaust of brake cylinder pressure to the atmosphere for all brake applications and releases. In addition, brake cylinder control portion 14 also provides a pneumatic backup capability to ensure fail safe braking functions in the case of an electronics failure, as well as for a complete loss of electrical power.

Brake cylinder control portion 14 responds to changes in pressure of the BP to provide automatic brake cylinder pressure, and to changes in the IAR pipe to provide independent brake cylinder pressure. A reduction of BP pressure or an increase in IAR pipe pressure will cause an increase in brake cylinder pressure.

Automatic brake cylinder pressure and independent brake cylinder pressure are released separately, according to the pressures in the BP or the IAR pipe respectively. Brake cylinder control portion 14 can operate in two different modes to release the automatic brake cylinder pressure: direct mode or graduated release mode. In direct mode, an increase in BP pressure of a predetermined amount will cause a complete release of the automatic brake cylinder pressure that had been developed as a result of a reduction of BP pressure. Note that independent brake cylinder pressure in the locomotive developed as a result of a rise in pressure in the IAR pipe is not released. In graduated release mode, an increase in BP pressure will cause a proportional release of automatic brake cylinder pressure that was developed as a result of the reduction in pressure in the BP. To release independent brake cylinder pressure, independent brake handle 34 is moved to the RELEASE position, which will cause the venting of the IAR pipe and a corresponding venting of independent brake cylinder pressure.

A bail-off operation, initiated by a movement of independent brake handle 34 to bail off position 44 in Figure 3b will cause all automatic brake cylinder pressure to be released. Bail off is cause by an increase of pressure in the ACT pipe by a predetermined amount.

Brake pipe control portion 16 provides BP pressure control when the automatic brake is in CUT-IN mode, allows CUT-IN/CUT-OUT configuration of the automatic brake, and provides the means to initiate an emergency vent of BP pressure. In LEAD/CUT-IN mode, the BP pressure follows the pressure in the equalizing reservoir, therefore, BP control portion 16 controls the BP pressure by controlling the pressure in the equalizing reservoir in response to changes in the position of automatic brake handle 32, depending upon the configuration of the locomotive. In TRAIL and LEAD/CUT-OUT configurations, the BP ignores the equalizing reservoir and is controlled by another unit. In TRAIL configuration, the equalizing reservoir pressure is reduced to zero.

In LEAD/CUT-IN and LEAD/CUT-OUT configuration, the equalizing reservoir pressure is controlled as follows. When automatic brake handle 32 is in the RELEASE position, the equalizing reservoir pressure is increased to a predetermined set point. In the MINIMUM SERVICE position, the equalizing reservoir pressure is decreased by a predetermined fixed amount. In the SERVICE ZONE, the equalizing reservoir pressure is adjusted proportional to the handle position within the service zone. In HANDLE OFF position, the equalizing reservoir is reduced to zero pressure at the normal service rate. Finally, in EMERGENCY position, the equalizing pressure is reduced to zero at the emergency rate.

Independent application and release portion 18, brake cylinder control portion 14 and brake pipe control portion 16 preferably consist of an aluminum, corrosion resistant treated body, which has been machined to contain the microcontroller module 60, transducers, magnet valves, valve bushings, check valves, mounting stud holes, air passages and chokes, and electrical connections required for operation. These units are field replaceable. To replace the unit, electrical connection 21 is disconnected and the unit is unbolted from manifold 12. The replacement unit is then bolted onto manifold 12 and electrical connection 21 is re-connected. All pneumatic connections are made automatically when the unit is connected to manifold 12.

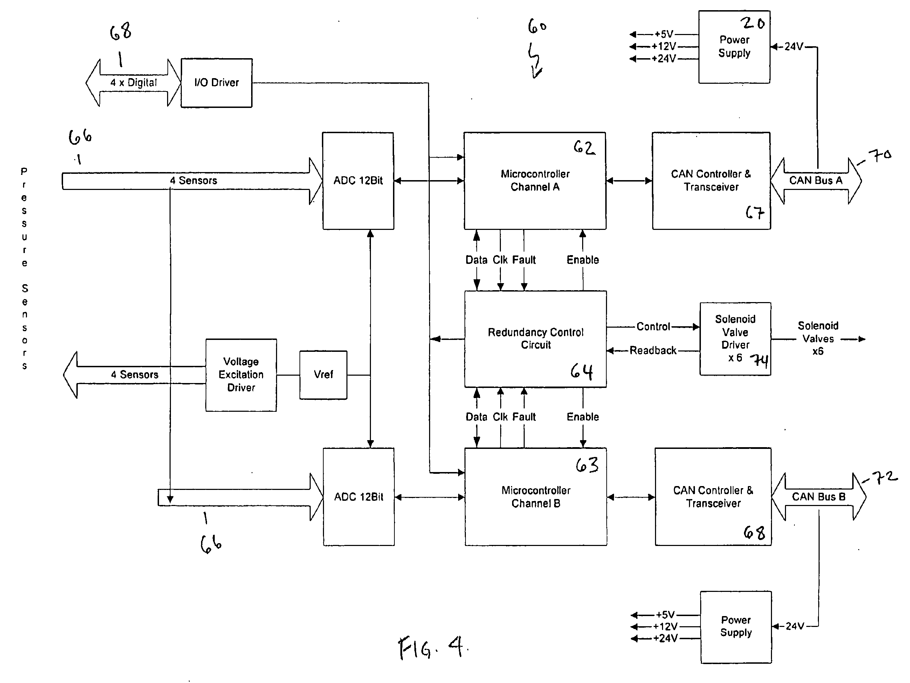

Each of the independent application and release portion 18, brake cylinder control portion 14 and brake pipe control portion 16 are equipped with a portion microcontroller module 60, shown in block diagram form in Figure 4, which controls the functioning of the respective portions, based on portion-specific software contained in on-board memory, such as, for example, FLASH memory. Other than the programming, portion control modules 60 are preferably physically identical for each of portions 14, 16 and 18.

The portion microcontroller 60 consists of two separate and identical microprocessor circuits, a primary 62 and a secondary 63. Both microprocessors 62 and 63 communicate a periodic watchdog signal and a fault signal to redundancy control circuitry 64. If an electrical or software malfunction occurs in primary microprocessor circuit 62, redundancy control circuitry 64 is able to switch on-the-fly to secondary microprocessor circuit 63, thereby allowing the brake system to continue operation without interruption.

The portion microcontroller modules 60 can take input from several sources. Each microcontroller 60 can have pressure transducer inputs 66 which are used to sense pressures in various areas of the braking system, according to the function of the portion being controlled. Additionally, each portion microcontroller 60 can have bi-directional digital I/O ports 68. Currently, the digital I/O ports are used for backup in the case where the supervisor computer on the locomotive fails, and are connected to various mechanical switches in the system that may indicate required actions. As an example, brake pipe control portion 14 has a digital I/O connected directly to automatic brake handle 32 to detect when this handle is moved to the EMERGENCY position. Not all digital I/Os need be used and some may be reserved for future expansion.

Portion microcontroller 60 also receives input from two, parallel, independent controller area network (CAN) busses 70 and 72 via CAN transceivers 67 and 68. Inputs received over the CAN networks 70 and 72 include data regarding the positions of braking handles 32 and 34 and signals from a separate CAN used by the locomotive electronics. Both primary microprocessor 62 and secondary microprocessor 63 accept all inputs and can run the same software.

Each portion microcontroller 60 is also equipped with drivers for solenoid valves 74. The drivers accept signals from the redundancy control circuitry 64 to energize and deenergize the solenoid valves. Solenoid valve drivers 74 also provide feedback signals that allow microprocessors 62 and 63 to determine whether drivers 74 are operating properly.

The communications between the portion controller 60 and the supervisory processor 90 on the locomotive can use the Controller Area Network (CAN) Bus specification. Both of the redundant microprocessor circuits 62 and 63 use a separate CAN bus 70 and 72 respectively between each of the other portion microcontrollers 60, the independent brake handle 34, the automatic brake handle 32 and supervisory processor 90. A gateway between the portion microcontroller CANs 70 and 72 and the locomotive CAN 92 is also provided, and may be conveniently located in brake handle unit 30, although the gateway circuitry may be located anywhere.

The power source for the portion microcontroller 60 is, in the preferred embodiment, 24V DC, and is supplied by power supply 20. An isolated DC/DC converter is used to supply the logic and analog power for the on-board electronics.

All software in portion microcontrollers 60 preferably resides in on-board memory, preferably FLASH memory, and can be programmable in-circuit. In the preferred embodiment, to reduce the complexity of the PCB circuitry and to enhance reliability, a microprocessor with internal FLASH and RAM memory is used.

A common board assembly is used for the portion microcontroller 60 on all three portions 14, 16 and 18. The identity of the portion microcontroller 60 is configured by a unique arrangement of jumpers installed on a connector that remains with the portion wiring harness.

As previously discussed, each portion microcontroller 60 consists of two separate and identical microprocessor circuits, primary 62 and secondary 63. Each microprocessor 62 and 63 communicates with supervisory processor 90 using its own separate CAN network 70 and 72 respectively, and receives power on an independent power bus 20.

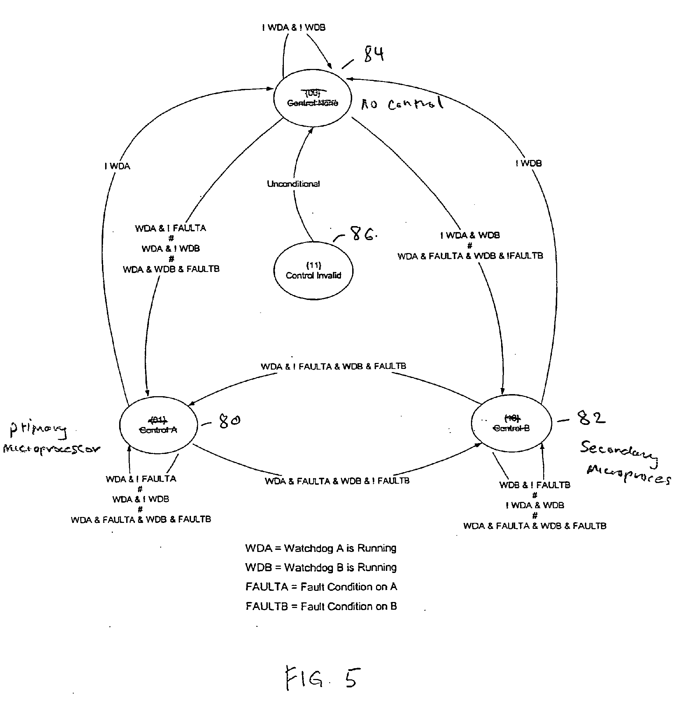

The state diagram for redundancy control circuitry 64 is shown in Figure 5. Each microprocessor 62 and 63 generates a watchdog signal which is periodically transmitted to redundancy control circuitry 64. Additionally, each microprocessor 62 and 63 also can send a fault signal to redundancy control circuitry 64. Under normal circumstances the redundancy control circuitry will be in state 80 as shown in Figure 5, in which primary microprocessor 62 is enabled and is therefore controlling solenoid valves 75 through solenoid valve driver 74. To be in state 80 it is necessary that the watchdog for the primary supervisory circuit 62 be running. Control is switched to state 82, in which secondary microprocessor 63 is enabled under one of two circumstances. If the watchdog signal for primary microprocessor 62 ceases to be received by redundancy control circuit 62 and the watchdog signal from secondary microprocessor 63 is being received, control will pass through state 84 and move to a state 82, regardless of faults present in either microprocessor. In the event that a fault occurs in the primary microprocessor 62, control will switch to state 82. In the event that both primary 62 and secondary 63 microprocessors are exhibiting faults, control will revert to state 80, which is the primary microprocessor 62. In the event that redundancy control circuit 64 detects that neither primary 62 nor secondary 63 microprocessors are providing a watchdog signal, the system will revert to state 84, in which case shutdown can be initiated, resulting in a brake application.

The air brake control of the present invention also employs a fail-safe braking feature that provides back-up protection and braking in situations involving total loss of electrical power, computer shutdown, or for when the locomotive is being hauled DEAD-IN-CONSIST/DEAD-IN-TRAIN. Pneumatic backup control valve 22 is a spring and diaphragm operating triple valve, initially charged by pressure from the BP. In the event of a power outage, a normally closed solenoid in the brake cylinder control portion 14 opens, allowing pressure from pneumatic backup control valve 22 to enter the brake cylinders.

A locomotive air brake control system has been described which is an improvement over electronic and mechanical control systems of the prior art. In the present invention, major portions of the brake control are packaged together in field replaceable units wherein each of the units is able to be easily removed and replaced by bolting the unit to a pneumatic manifold and engaging a single electrical connector. The action of bolting the unit to the pneumatic manifold automatically makes all of the pneumatic connections and therefore voids having to un-secure and re-secure several pneumatic lines. The only other connection that needs to be made to the field replaceable portion is an electrical connection containing power and network connections. Additionally, each of the replaceable portions has a onboard microcontroller which is specific to that portion. This is in contrast to prior art designs which employed one processor to run all functions of the brake, therefore having a single point of failure. The present invention distributes the processing over the portions and, in addition, provides for redundant processing and redundant communications buses. In addition, the configuration of the brake control with the field replaceable units allows customized configurations for varying applications. For example, certain custom applications may only require one of the portions with the functions of the other portions being provided by systems external to the present air brake control.

The automatic electric air brake control of the present invention has been described which includes features for improved reliability and maintainability of the unit. The scope of the invention should not be limited by any descriptions of functionality or configuration herein but are embodied in the claims which follow.

## Claims

1. Electronic braking control for a locomotive having one or more pneumatic brake cylinders, a brake pipe, an independent application and release pipe and an actuating pipe, the electronic braking control comprising:
one or more portions (14, 16, 18) for controlling the pressure in said one or more pneumatic brake cylinders and in said brake pipe, said independent application and release pipe and said actuating pipe; and
a plurality of distributed electronic microcontrollers (60), one of said distributed microcontrollers (60) controlling each of said one or more portions (14, 16, 18), said distributed microcontrollers (60) being linked to each other via a network,
**characterized in that**
each of said electronic microcontrollers (60) comprises:
redundant, independent microprocessors (62, 63), each of said microprocessors (62, 63) running identical portion-specific software; and
a redundancy control portion (64) for choosing which one of said redundant microprocessors (62, 63) is active.

2. The electronic braking control of claim 1 further comprising one or more redundant networks linking said plurality of distributed microcontrollers (60).

3. The electronic braking control of claim 2, wherein each of said microcontrollers (60) contains software implementing functions specific to the portion (14, 16, 18) with which it is installed.

4. The electronic braking control of claim 1, further comprising:
a brake handle unit (30) having an independent brake handle (34) and an automatic brake handle (32), said brake handle unit (30) being coupled to said network of distributed microcontrollers (60), said plurality of microcontrollers (60) receiving signals from said brake handle unit (30) via said network regarding the movement and position of said independent and said automatic brake handles (34, 32).

5. The electronic braking control of claim 1, wherein said network is a Controller Area Network (CAN), which is in particular in direct communication with a computer (90) onboard said locomotive.

6. The electronic braking control of claim 2 wherein each one of said one or more redundant microprocessors (62, 63) is linked to one of said one or more redundant networks connecting said plurality of microcontrollers (60).

7. The electronic braking control of claim 6, wherein each of said portions (14, 16, 18) further comprises:
a plurality of pressure transducers for sensing pressures; and
a plurality of solenoids for opening and closing valves; and
further wherein each of said microcontrollers (60) further comprises:
a plurality of inputs (66) for reading said plurality of pressure transducers;
and a plurality of outputs (74) for controlling said plurality of solenoids, based on said portion-specific software.

8. The electronic braking control of claim 7, wherein said redundancy control portion (64) assigns one of said redundant microprocessors (62, 63) in said electronic microcontroller (60) to control said plurality of outputs (74) for controlling said solenoids for the portion (14, 16, 18) in which it is installed.

9. The electronic braking control of claim 8, wherein said redundancy control portion (64) receives a periodic watchdog signal and a fault signal from each of said redundant microprocessors (62, 63).

10. The electronic braking control of claim 4, further comprising:
a gateway linking said one or more redundant networks with a locomotive network (92); and
translating circuitry for translating messages to and from a format compatible with said locomotive network.

11. The electronic braking control of claim 1 wherein said one or more portions (14, 16, 18) includes a brake cylinder control portion (14) for controlling the pressure in said one or more pneumatic brake cylinders based on changes in pressure in said brake pipe, said independent application and release pipe and said actuating pipe.

12. The electronic braking control of claim 1 wherein said one or more portions (14, 16, 18) includes a brake cylinder control portion (14) for controlling the pressure in said one or more pneumatic brake cylinders based on messages received by said microcontroller (60) over said network.

13. The electronic braking control of claim 1, wherein said one or more portions (14, 16, 18) includes a brake pipe control portion (16) for controlling the pressure in said brake pipe.

14. The electronic braking control of claim 1, wherein said one or more portions (14, 16, 18) includes an IAR/ACT control portion (18) for controlling the pressure in said independent application and release pipe and said actuating pipe.

15. The electronic braking control of claim 1, wherein said one or more portions (14, 16, 18) includes:
a brake cylinder control portion (14) for controlling the pressure in said one or more pneumatic brake cylinders;
a brake pipe control portion (16) for controlling the pressure in said brake pipe; and
a IAR/ACT control portion (18) for controlling the pressure in said independent application and release pipe and said actuating pipe.

16. The electronic braking control of claim 10 wherein said portions (14, 16, 18) control said pressures under the control of said software running in said distributed microcontrollers (60), said microcontrollers (60) receiving input from:
said brake cylinders, said brake pipe, said independent application and release pipe and said actuating pipe via a plurality of transducers read by said microcontrollers (60);
said brake handle unit (30), via said network; and
a computer (90) located on said locomotive, via said gateway between said network and said locomotive network (92).

17. The electronic braking control of claim 16 wherein said microcontrollers (60) control said pressures via a plurality of solenoid-controlled valves.

18. The electronic braking control of claim 17, wherein said redundancy control portion (64) decides which of said redundant microprocessors (62, 63) in said microcontroller (60) controls said solenoid-controlled valves.

19. Locomotive having one or more pneumatic brake cylinders, a brake pipe, an independent application and release pipe and an actuating pipe,
**characterized in that**
the locomotive further comprises an electronic braking control according to one of claims 1 to 18.

## Patentansprüche

1. Elektronische Bremssteuerung für eine Lokomotive mit einem oder mehreren pneumatischen Bremszylindern, einer Bremsleitung, einer unabhängigen Betätigungs- und Löseleitung und einer Auslöseleitung, wobei die elektronische Bremssteuerung aufweist:
einen oder mehrere Abschnitte (14, 16, 18) zum Steuern des Drucks in dem einen oder den mehreren pneumatischen Bremszylindern und in der Bremsleitung, der unabhängigen Betätigungs- und Löseleitung und der Auslöseleitung; und
eine Vielzahl an verteilten elektronischen Mikrocontrollern (60), wobei einer der verteilten Mikrocontroller (60) jeweils einen oder mehrere der Abschnitte (14, 16, 18) steuert, wobei die verteilten Mikrocontroller (60) über ein Netzwerk miteinander verbunden sind,
**dadurch gekennzeichnet, dass**
jeder der elektronischen Mikrocontroller (60) aufweist:
redundante, unabhängige Mikroprozessoren (62, 63), wobei jeder der Mikroprozessoren (62, 63) identische abschnittsspezifische Software betreibt; und
einen Redundanzsteuerabschnitt (64) zum Auswählen, welcher der redundanten Mikroprozessoren (62, 63) aktiv ist.

2. Elektronische Bremssteuerung nach Anspruch 1, ferner mit einem oder mehreren redundanten Netzwerken, die die Vielzahl an verteilten Mikrocontrollern (60) verbinden.

3. Elektronische Bremssteuerung nach Anspruch 2, wobei jeder der Mikrocontroller (60) Software enthält, die Funktionen ausführt, die für den Abschnitt (14, 16, 18) spezifisch sind, mit welchem er installiert ist.

4. Elektronische Bremssteuerung nach Anspruch 1, ferner mit:
einer Bremsgriffeinheit (30) mit einem unabhängigen Bremsgriff (34) und einem automatischen Bremsgriff (32), wobei die Bremsgriffeinheit (30) an das Netzwerk der verteilten Mikrocontroller (60) gekoppelt ist, wobei die Vielzahl an Mikrocontrollern (60) über das Netzwerk Signale von der Bremsgriffeinheit (30) empfängt, die die Bewegung und Position des unabhängigen und des automatischen Bremsgriffs (34, 32) betreffen.

5. Elektronische Bremssteuerung nach Anspruch 1, wobei das Netzwerk ein Controller Area Network (CAN) ist, das insbesondere mit einem Computer (90) an Bord der Lokomotive in direkter Verbindung steht.

6. Elektronische Bremssteuerung nach Anspruch 2, wobei jeder des einen oder der mehreren redundanten Mikroprozessoren (62, 63) mit einem des einen oder der mehreren redundanten Netzwerke verbunden ist, das die Vielzahl an Mikrocontrollern (60) verbindet.

7. Elektronische Bremssteuerung nach Anspruch 6, wobei jeder der Abschnitte (14, 16, 18) ferner aufweist:
eine Vielzahl an Drucksensoren zum Messen von Drücken; und eine Vielzahl an Solenoiden zum Öffnen und Schließen von Ventilen; und
wobei weiterhin jeder der Mikrocontroller (60) ferner aufweist:
eine Vielzahl an Eingängen (66) zum Lesen der Vielzahl an Druckaufnehmern;
und eine Vielzahl an Ausgängen (74) zum Steuern der Vielzahl an Solenoiden auf der Basis der abschnittsspezifischen Software.

8. Elektronische Bremssteuerung nach Anspruch 7, wobei der Redundanzsteuerabschnitt (64) einen der redundanten Mikroprozessoren (62, 63) im elektronischen Mikrocontroller (60) anweist, die Vielzahl an Ausgängen (74) zum Steuern der Solenoide für den Abschnitt (14, 16, 18) in welchem er installiert ist, zu steuern.

9. Elektronische Bremssteuerung nach Anspruch 8, wobei der Redundanzsteuerabschnitt (64) ein periodisches Überwachungssignal und ein Fehlersignal von jedem der redundanten Mikroprozessoren (62, 63) empfängt.

10. Elektronische Bremssteuerung nach Anspruch 4, ferner mit:
einem Gateway, das das eine oder die mehreren redundanten Netzwerke mit einem Lokomotivennetzwerk (92) verbindet; und
einer Übersetzungsschaltung zum Übersetzen von Nachrichten in und aus einem mit dem Lokomotivennetzwerk kompatiblen Format.

11. Elektronische Bremssteuerung nach Anspruch 1, wobei der eine oder die mehreren Abschnitte (14, 16, 18) einen Bremszylindersteuerabschnitt (14) zum Steuern des Drucks in dem einen oder den mehreren pneumatischen Bremszylindern auf der Basis von Änderungen des Drucks in der Bremsleitung, der unabhängigen Betätigungs- und Löseleitung und der Auslöseleitung aufweisen.

12. Elektronische Bremssteuerung nach Anspruch 1, wobei der eine oder die mehreren Abschnitte (14, 16, 18) einen Bremszylindersteuerabschnitt (14) zum Steuern des Drucks in dem einen oder den mehreren pneumatischen Bremszylinder auf der Basis von durch den Mikrocontroller (60) über das Netzwerk empfangenen Nachrichten aufweisen.

13. Elektronische Bremssteuerung nach Anspruch 1, wobei der eine oder die mehreren Abschnitte (14, 16, 18) einen Bremsleitungssteuerabschnitt (16) zum Steuern des Drucks in der Bremsleitung aufweisen.

14. Elektronische Bremssteuerung nach Anspruch 1, wobei der eine oder die mehreren Abschnitte (14, 16, 18) einen IAR/ACT-Steuerabschnitt (18) zum Steuern des Drucks in der unabhängigen Betätigungs- und Löseleitung und der Auslöseleitung aufweisen.

15. Elektronische Bremssteuerung nach Anspruch 1, wobei der eine oder die mehreren Abschnitte (14, 16, 18) aufweisen:
einen Bremszylindersteuerabschnitt (14) zum Steuern des Drucks in dem einen oder den mehreren pneumatischen Bremszylindern;
einen Bremsleitungssteuerabschnitt (16) zum Steuern des Drucks in der Bremsleitung; und
einen IAR/ACT-Steuerabschnitt (18) zum Steuern des Drucks in der unabhängigen Betätigungs- und Löseleitung und der Auslöseleitung.

16. Elektronische Bremssteuerung nach Anspruch 10, wobei die Abschnitte (14, 16, 18) die Drücke unter der Steuerung der in den verteilten Mikrocontrollern (60) laufenden Software steuern, wobei die Mikrocontroller (60) Eingänge empfangen von:
den Bremszylindern, der Bremsleitung, der unabhängigen Betätigungs- und Löseleitung und der Auslöseleitung über eine Vielzahl an von den Mikrocontrollern (60) gelesenen Sensoren;
der Bremsgriffeinheit (30) über das Netzwerk; und
einem auf der Lokomotive lokalisierten Computer (90) über das Gateway zwischen dem Netzwerk und dem Lokomotivennetzwerk (92).

17. Elektronische Bremssteuerung nach Anspruch 16, wobei die Mikrocontroller (60) die Drücke über eine Vielzahl an solenoidgesteuerten Ventilen steuern.

18. Elektronische Bremssteuerung nach Anspruch 17, wobei der Redundanzsteuerabschnitt (64) entscheidet, welcher der redundanten Mikroprozessoren (62, 63) im Mikrocontroller (60) die solenoidgesteuerten Ventile steuert.

19. Lokomotive mit einem oder mehreren pneumatischen Bremszylindern, einer Bremsleitung, einer unabhängigen Betätigungs- und Löseleitung und einer Auslöseleitung,
**dadurch gekennzeichnet, dass**
die Lokomotive ferner eine elektronische Bremssteuerung nach einem der Ansprüche 1 bis 18 aufweist.

## Revendications

1. Commande électronique de freinage pour une locomotive ayant un ou plusieurs cylindres pneumatiques de frein, une conduite de frein, une conduite indépendante de serrage et de desserrage et une conduite de desserrage de frein automatique, la commande électronique de freinage comprenant :
une ou plusieurs parties (14, 16, 18) pour contrôler la pression dans le(s)dit(s) un ou plusieurs cylindre(s) pneumatique(s) de frein et dans ladite conduite de frein, ladite conduite indépendante de serrage et de desserrage et ladite conduite de desserrage de frein automatique ; et
une pluralité de microcontrôleurs électroniques distribués (60), l'un desdits microcontrôleurs distribués (60) commandant chacune de ladite une ou desdites plusieurs parties (14, 16, 18), lesdits microcontrôleurs distribués (60) étant reliés les uns aux autres par un réseau,
***caractérisée en ce que***
chacun desdits microcontrôleurs électroniques (60) comprend :
des microprocesseurs redondants indépendants (62, 63), chacun desdits microprocesseurs (62, 63) exécutant un logiciel identique propre à une partie ; et
une partie de commande de redondance (64) pour choisir lequel desdits microprocesseurs redondants (62, 63) est actif.

2. Commande électronique de freinage selon la revendication 1, comprenant de plus un ou plusieurs réseaux redondants reliant ladite pluralité de microcontrôleurs distribués (60).

3. Commande électronique de freinage selon la revendication 2, dans laquelle chacun desdits microcontrôleurs (60) contient un logiciel mettent en oeuvre des fonctions propres à la partie (14, 16, 18) avec laquelle il est installé.

4. Commande électronique de freinage selon la revendication 1, comprenant de plus :
une unité (30) de poignées de frein ayant une poignée de frein indépendante (34) et une poignée de frein automatique (32), ladite unité (30) de poignées de frein étant couplée audit réseau de microcontrôleurs distribués (60), ladite pluralité de microcontrôleurs (60) recevant des signaux de ladite unité (30) de poignées de frein via ledit réseau concernant le mouvement et la position desdites poignées de frein indépendante et automatique (34, 32).

5. Commande électronique de freinage selon la revendication 1, dans laquelle ledit réseau est un réseau contrôleur (Controller Area Network, CAN), qui est en particulier en communication directe avec un ordinateur (90) à bord de ladite locomotive.

6. Commande électronique de freinage selon la revendication 2, dans laquelle chacun dudit un ou desdits plusieurs microprocesseurs redondants (62, 63) est relié à l'un dudit un ou desdits plusieurs réseaux redondants reliant ladite pluralité de microcontrôleurs (60).

7. Commande électronique de freinage selon la revendication 6, dans laquelle chacune desdites parties (14, 16, 18) comprend de plus :
une pluralité de transducteurs de pression pour détecter des pressions ; et
une pluralité de solénoïdes pour ouvrir et fermer des vannes ; et
dans laquelle, de plus, chacun desdits microcontrôleurs (60) comprend de plus :
une pluralité d'entrées (66) pour lire ladite pluralité de transducteurs de pression ;
et une pluralité de sorties (74) pour contrôler ladite pluralité de solénoïdes, sur la base dudit logiciel propre à la partie.

8. Commande électronique de freinage selon la revendication 7, dans laquelle ladite partie de commande de redondance (64) affecte l'un desdits microprocesseurs redondants (62, 63) dans ledit microcontrôleur électronique (60) pour contrôler ladite pluralité de sorties (74) destinées à contrôler lesdits solénoïdes pour la partie (14, 16, 18) dans laquelle il est installé.

9. Commande électronique de freinage selon la revendication 8, dans laquelle ladite partie de commande de redondance (64) reçoit un signal périodique de chien de garde (surveillance) et un signal de défaut depuis chacun desdits microprocesseurs redondants (62, 63).

10. Commande électronique de freinage selon la revendication 4, comprenant de plus :
une passerelle reliant le(s)dit(s) un ou plusieurs réseau(x) redondant(s) à un réseau de la locomotive (92) ; et
un circuit de traduction pour traduire des messages vers et depuis un format compatible avec ledit réseau de la locomotive.

11. Commande électronique de freinage selon la revendication 1, dans laquelle ladite une ou lesdites plusieurs parties (14, 16, 18) comprend(comprennent) une partie (14) de commande de cylindres de frein pour commander la pression dans ledit un ou lesdits plusieurs cylindres de frein d'après des variations de pression dans ladite conduite de frein, ladite conduit indépendant de serrage et de desserrage et ladite conduite de desserrage de frein automatique.

12. Commande électronique de freinage selon la revendication 1, dans laquelle ladite une ou lesdites plusieurs parties (14, 16, 18) comprend(comprennent) une partie (14) de commande de cylindres de frein pour commander la pression dans ledit un ou lesdits plusieurs cylindres de frein d'après des messages reçus par ledit microcontrôleur (60) sur ledit réseau.

13. Commande électronique de freinage selon la revendication 1, dans laquelle ladite une ou lesdites plusieurs parties (14, 16, 18) comprend(comprennent) une partie (16) de commande de conduite de frein pour commander la pression dans ladite conduite de frein.

14. Commande électronique de freinage selon la revendication 1, dans laquelle ladite une ou lesdites plusieurs parties (14, 16, 18) comprend(comprennent) une partie de commande IAR/ACT (18) pour commander la pression dans ladite conduite indépendante de serrage et de desserrage et dans ladite conduite automatique de desserrage du frein.

15. Commande électronique de freinage selon la revendication 1, dans laquelle ladite une ou lesdites plusieurs parties (14, 16, 18) comprend (comprennent) :
une partie (14) de commande de cylindre de frein pour commander la pression dans le(s)dit(s) un ou plusieurs cylindre(s) pneumatique(s) de frein ;
une partie (16) de commande de conduite de frein pour commander la pression dans ladite conduite de frein ; et
une partie de commande IAR/ACT (18) pour commander la pression dans ladite conduite indépendante de serrage et de desserrage et dans ladite conduite automatique de desserrage du frein.

16. Commande électronique de freinage selon la revendication 10, dans laquelle ladite une ou lesdites plusieurs parties (14, 16, 18) commande(nt) lesdites pressions sous le contrôle dudit logiciel exécuté dans lesdits microcontrôleurs distribués (60), lesdits microcontrôleurs (60) recevant une entrée depuis :
lesdits cylindres de frein, ladite conduite de frein, ladite conduite indépendante de serrage et de desserrage et de ladite conduite automatique de desserrage du frein, via une pluralité de transducteurs lus par lesdits microcontrôleurs (60) ;
ladite unité (30) de poignée de frein, via ledit réseau ; et
un ordinateur (90) situé sur ladite locomotive, via ladite passerelle entre ledit réseau et ledit réseau de la locomotive (92).

17. Commande électronique de freinage selon la revendication 16, dans laquelle lesdits microcontrôleurs (60) commandent lesdites pressions via une pluralité de vannes à solénoïde.

18. Commande électronique de freinage selon la revendication 17, dans laquelle ladite partie (64) de commande de redondance décide lequel desdits microprocesseurs redondants (62, 63) dans ledit microcontrôleur (60) commande lesdites vannes à solénoïde.

19. Locomotive ayant un ou plusieurs cylindres pneumatiques de frein, une conduite de frein, une conduite indépendante de serrage et de desserrage et une conduite automatique de desserrage du frein,
***caractérisée* en ce *que*** la locomotive comprend de plus une commande électronique de freinage selon l'une des revendications 1 à 18.
